# EUROPÄISCHE PATENTSCHRIFT

(11) **EP 2 726 335 B1**
(45) Veröffentlichungstag und Bekanntmachung des Hinweises auf die Patenterteilung: **21.10.2020**
(21) Anmeldenummer: 12723177.7
(22) Anmeldetag: 22.05.2012
(51) Int. Cl.: B60S 1/38

(54) **WISCHVORRICHTUNG**
WIPING DEVICE
DISPOSITIF D'ESSUYAGE

(30) Priorität: 28.06.2011 DE 102011078200
(43) Veröffentlichungstag der Anmeldung: 07.05.2014
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2012/059484
(87) Internationale Veröffentlichungsnummer: WO 2013/000633

(56) Entgegenhaltungen:
- WO-A1-2010/016000
- DE-A1- 10 043 427
- DE-U1-202011 003 000
- US-A1- 2003 213 089

## Beschreibung

### Stand der Technik

Es ist bereits eine Wischvorrichtung, insbesondere eine Kraftfahrzeugscheibenwischvorrichtung, mit einem Federelement und mit einem Wischblattadapter, der zumindest ein Rastelement aufweist, bekannt (siehe z.B. Dokument US2003213089 A1).

### Offenbarung der Erfindung

Die Erfindung geht aus von einer Wischvorrichtung, insbesondere von einer Kraftfahrzeugscheibenwischvorrichtung, mit einem Federelement und mit einem Wischblattadapter, der zumindest ein Rastelement aufweist.

Es wird vorgeschlagen, dass das Federelement zumindest eine runde Rastausnehmung aufweist, in die das zumindest eine Rastelement in einem montierten Zustand formschlüssig eingreift und eine Bewegung des Wischblattadapters relativ zum Federelement in eine Längsrichtung vermeidet, wodurch eine besonders stabile Befestigung des Federelements am Wischblattadapter erreicht werden kann. Unter einem "Federelement" soll in diesem Zusammenhang insbesondere ein federelastisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden. Unter "rund" soll in diesem Zusammenhang insbesondere kantenfrei und/oder ellipsenförmig und/oder bevorzugt kreisrund verstanden werden. Unter einer "Rastausnehmung" soll in diesem Zusammenhang insbesondere eine Ausnehmung verstanden werden, die dazu vorgesehen ist, ein korrespondierendes Rastelement aufzunehmen. Unter einer "Längsrichtung" soll in diesem Zusammenhang insbesondere eine Richtung verstanden werden, die sich im Wesentlichen parallel zu einer Längserstreckung des Federelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter "vorgesehen" soll insbesondere speziell ausgelegt und/oder ausgestattet verstanden werden.

In einer weiteren Ausgestaltung der Erfindung wird vorgeschlagen, dass das zumindest eine Rastelement am Federelement in einem montierten Zustand an einer wischleistenabgewandten Seite anliegt, wodurch ein besonders kompakter Aufbau der Wischvorrichtung erreicht werden kann.

Ist das zumindest eine Rastelement dazu vorgesehen, bei einer Montage zumindest im Wesentlichen in eine Vertikalrichtung ausgelenkt zu werden, kann eine besonders kompakte Bauform bei gleichzeitig hoher Betriebssicherheit erreicht werden. Unter einer "Vertikalrichtung" soll in diesen Zusammenhang insbesondere eine Richtung verstanden werden, die sich zumindest im Wesentlichen senkrecht zur Längsrichtung und senkrecht zu einer Wischrichtung erstreckt. Unter einer "Wischrichtung" soll in diesem Zusammenhang insbesondere eine Richtung verstanden werden, die sich parallel zu einer zu wischenden Oberfläche und/oder senkrecht zu einer Hauptausrichtung einer Wischleiste erstreckt. Unter einer "Wischleiste" soll in diesem Zusammenhang insbesondere eine Leiste verstanden werden, die dazu vorgesehen ist, eine Fahrzeugscheibe zu wischen.

Erfindungsgemäß wird vorgeschlagen, dass das zumindest eine Rastelement zumindest zwei Rastarme aufweist, die mit dem Wischblattadapter verbunden und dazu vorgesehen sind, federelastisch ausgelenkt zu werden, wodurch das Rastelement besonders stabil und belastbar ausgebildet werden kann. Unter einem "Rastarm" soll in diesem Zusammenhang insbesondere ein Arm verstanden werden, der das Rastelement federelastisch mit dem Wischblattadapter verbindet.

Des Weiteren wird vorgeschlagen, dass sich die zumindest zwei Rastarme in einer Haupterstreckung zumindest im Wesentlichen parallel zur Längsrichtung des Federelements erstrecken, wodurch eine besonders einfache und flache Bauweise der Wischvorrichtung erreicht werden kann.

Ist das zumindest eine Rastelement um eine Schwenkachse auslenkbar, die sich parallel zu einer Wischrichtung erstreckt, kann eine besonders flache Bauform der Wischvorrichtung erreicht werden.

### Zeichnungen

Weitere Vorteile ergeben sich aus der folgenden Zeichnungsbeschreibung. In der Zeichnung sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischvorrichtung mit einem Wischblattadapter,
- Fig. 2: eine Schnittdarstellung eines Halteelements mit einem Federelement der Wischvorrichtung nach Figur 1,
- Fig. 3: eine Draufsicht des Federelements nach Figur 2,
- Fig. 4: eine perspektivische Ansicht eines Schnitts des Wischblattadapters und des Federelements nach Figur 3,
- Fig. 5: eine Draufsicht eines Federelements eines weiteren Ausführungsbeispiels einer Wischvorrichtung,
- Fig. 6: eine perspektivische Ansicht eines Schnitts eines Wischblattadapters mit dem Federelement nach Figur 5,
- Fig. 7: eine Draufsicht eines Federelements eines weiteren Ausführungsbeispiels einer Wischvorrichtung,
- Fig. 8: eine perspektivische Ansicht eines Schnitts eines Wischblattadapters mit dem Federelement nach Figur 7,
- Fig. 9: eine Draufsicht eines Federelements eines weiteren Ausführungsbeispiels einer Wischvorrichtung und
- Fig. 10: eine perspektivische Ansicht eines Schnitts eines Wischblattadapters mit dem Federelement nach Figur 9.

### Beschreibung der Ausführungsbeispiele

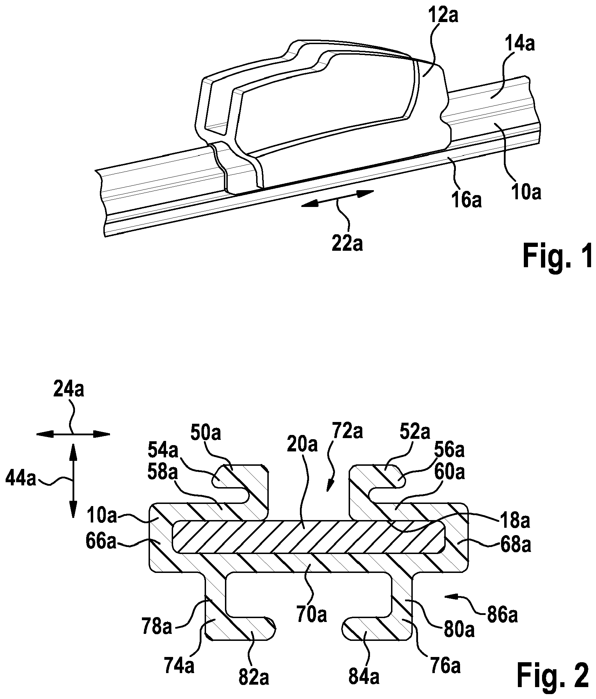

Figur 1 zeigt eine perspektivische Ansicht einer erfindungsgemäßen Wischvorrichtung mit einem Halteelement 10a, einem Wischblattadapter 12a, einem Windabweiserelement 14a und einer Wischleiste 16a in einem montierten Zustand. Der Wischblattadapter 12a, das Windabweiserelement 14a und die Wischleiste 16a sind am Halteelement 10a befestigt. Der Wischblattadapter 12a ist dazu vorgesehen, mit einem Wischerarm (nicht dargestellt) gekoppelt zu werden. Über das Halteelement 10a wird die Wischleiste 16a in einem Betriebszustand, d.h. wenn der Wischerarm eine Wischbewegung ausführt, über eine zu wischende Oberfläche (nicht dargestellt) bewegt. Bei einem Auftreffen von Fahrtwind weist das Windabweiserelement 14a diesen ab und presst die Wischvorrichtung auf die zu wischende Oberfläche.

Figur 2 zeigt das Halteelement 10a, das einen Längsführungskanal 18a zur Führung eines Federelements 20a aufweist, in einer Schnittdarstellung. Die Schnittebene verläuft senkrecht zu einer Längsrichtung 22a des Halteelements 10a. Das Halteelement 10a weist zwei Windabweiserbefestigungselemente 50a, 52a auf. Die Windabweiserbefestigungselemente 50a, 52a sind einstückig mit dem Halteelement 10a ausgebildet. Die Windabweiserbefestigungselemente 50a, 52a weisen an ihren freien Enden 54a, 56a in voneinander abgewandte Richtungen. Ferner bilden die Windabweiserbefestigungselemente 50a, 52a zwei Kanalwandungen 58a, 60a, die an den Längsführungskanal 18a an einer wischleistenabgewandten Seite angrenzen. Die Windabweiserbefestigungselemente 50a, 52a sind im Bereich ihrer freien Enden 54a, 56a widerhakenförmig ausgebildet. Die Enden 54a, 56a sind in einem montierten Zustand von dem Windabweiserelement 14a umschlossen.

Zur Führung des Federelements 20a grenzen Seitenwandungen 66a, 68a des Längsführungskanals 18c an die Kanalwandungen 58a, 60a. Die Kanalwandungen 58a, 60a schließen dabei einen rechten Winkel mit den Seitenwandungen 66a, 68a ein. An die Seitenwandungen 66a, 68a ist ferner eine Zwischenwandung 70a angeordnet, die den Längsführungskanal 18a in Richtung der Wischleiste 16a abschließt. Die Seitenwandungen 66a, 68a erstrecken sich von der Zwischenwandung 70a aus in eine von der Wischleiste 16a abgewandte Richtung. Das Halteelement 10a weist eine Längsöffnung 72a auf, die den Längsführungskanal 18a zum Windabweiserelement 14a hin öffnet.

An der Zwischenwandung 70a sind zwei L-förmige Führungsprofile 74a, 76a des Halteelements 10a angeordnet. Die Führungsprofile 74a, 76a sind einstückig mit dem Halteelement 10a ausgebildet. Die Führungsprofile 74a, 76a weisen jeweils eine Seitenführung 78a, 80a und jeweils eine Vertikalführung 82a, 84a auf. Die Vertikalführungen 82a, 84a schließen mit den Seitenführungen 78a, 80a jeweils einen Winkel von 90° ein. Die Seitenführungen 78a, 80a schließen jeweils einen Winkel von 90° zur Zwischenwandung 70a ein. Die Führungsprofile 74a, 76a weisen an ihren freien Enden der Vertikalführungen 82a, 84a in einander zugewandte Richtungen. Die Führungsprofile 74a, 76a und die Zwischenwandung 70a bilden eine Kederschiene 86a, in welche die Wischleiste 16a in einem montierten Zustand eingeführt ist.

Das Halteelement 10a ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid, Polycarbonat und/oder Polystyrol.

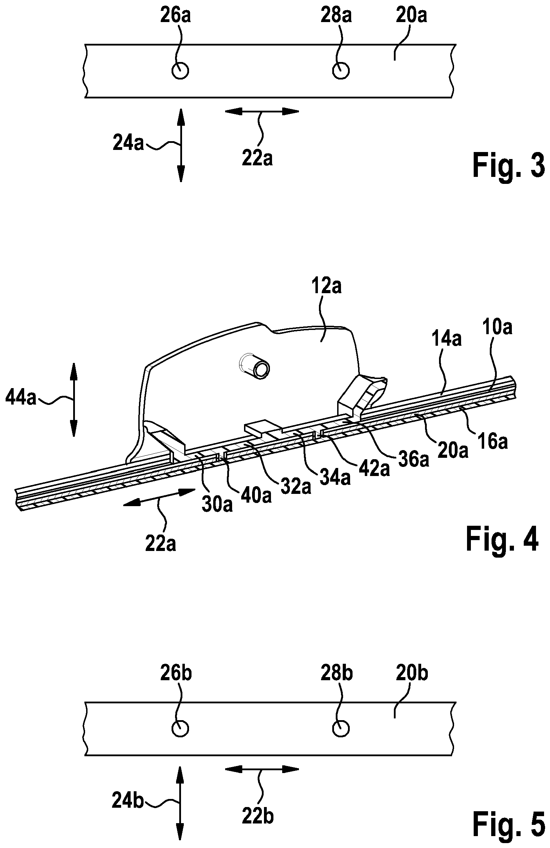

Figur 3 zeigt eine Draufsicht auf das Federelement 20a. Das Federelement 20a weist zwei runde Rastausnehmungen 26a, 28a auf. Die Rastausnehmungen 26a, 28a sind kreisrund ausgebildet. Die Rastausnehmungen 26a, 28a sind in Längsrichtung 22a betrachtet hintereinander angeordnet, wobei gedachte Zentren der Rastausnehmungen 26a, 28a auf einer Symmetrieebene des Federelements 20a angeordnet sind, die sich senkrecht zu einer Wischrichtung 24a der Wischvorrichtung erstreckt. Ein jeweiliger Durchmesser der Rastausnehmungen 26a, 28a entspricht einem Drittel der Gesamterstreckung des Federelements 20a in Wischrichtung 24a.

In Figur 4 sind der Wischblattadapter 12a, das Halteelement 10a und das Federelement 20a in einem Schnitt dargestellt. Der Wischblattadapter 12a weist zwei Rastelemente 40a, 42a auf. Die beiden Rastelemente 40a, 42a greifen in einem montierten Zustand formschlüssig in die Rastausnehmungen 26a, 28a des Federelements 20a ein und vermeiden so eine Bewegung des Wischblattadapters 12a relativ zum Federelement 20a in Längsrichtung 22a. Die beiden Rastelemente 40a, 42a liegen dabei am Federelement 20a an einer wischleistenabgewandten Seite an.

Die Rastelemente 40a, 42a weisen jeweils zwei Rastarme 30a, 32a, 34a, 36a auf, die mit dem Wischblattadapter 12a verbunden und dazu vorgesehen sind, federelastisch ausgelenkt zu werden. Die zwei Rastarme 30a, 32a erstrecken sich in einer Haupterstreckung parallel zur Längsrichtung 22a des Federelements 20a. Die Rastelemente 40a, 42a sind jeweils um zwei Schwenkachsen auslenkbar, die sich parallel zu einer Wischrichtung 24a erstrecken. Die Rastelemente 40a, 42a erstrecken sich von den Rastarmen 30a, 32a fortsatzmäßig in Richtung der Wischleiste 16a.

Die Rastelemente 40a, 42a werden bei der Montage zunächst aus einer Ausgangsposition heraus in eine Vertikalrichtung 44a federelastisch ausgelenkt. Die Vertikalrichtung 44a erstreckt sich senkrecht zur Längsrichtung 22a und senkrecht zur Wischrichtung 24a. Somit steht die Vertikalrichtung 44a in einem Betriebszustand zumindest im Wesentlichen senkrecht zu einer zu wischenden Oberfläche (nicht dargestellt). Sobald die Rastelemente 40a, 42a ausgelenkt sind, wird der Wischblattadapter 12a in Längsrichtung 22a auf das Halteelement 10a und das im Halteelement 10a eingesetzte Federelement 20a aufgeschoben. Befinden sich die Rastelemente 40a, 42a über den Rastausnehmungen 26a, 28a, greifen sie in diese formschlüssig ein. Eine Bewegung des Federelements 20a relativ zum Wischblattadapter 12a in Längsrichtung 22a ist somit vermieden.

In den Figuren 5 bis 10 sind drei weitere Ausführungsbeispiele gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in den Figuren 1 bis 4 durch die Buchstaben b bis d in den Bezugszeichen der Ausführungsbeispiele der Figuren 5 bis 10 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 5 zeigt eine Draufsicht auf ein Federelement 20b eines weiteren Ausführungsbeispiels einer Wischvorrichtung. Das Federelement 20b weist zwei runde Rastausnehmungen 26b, 28b auf. Die Rastausnehmungen 26b, 28b sind kreisrund ausgebildet. Die Rastausnehmungen 26b, 28b sind, in Längsrichtung 22b betrachtet, hintereinander angeordnet, wobei gedachte Zentren der Rastausnehmungen 26b, 28b auf einer Symmetrieebene des Federelements 20b angeordnet sind, die sich senkrecht zu einer Wischrichtung 24b der Wischvorrichtung erstreckt. Ein jeweiliger Durchmesser der Rastausnehmungen 26b, 28b entspricht einem Drittel der Gesamterstreckung des Federelements 20b in Wischrichtung 24b.

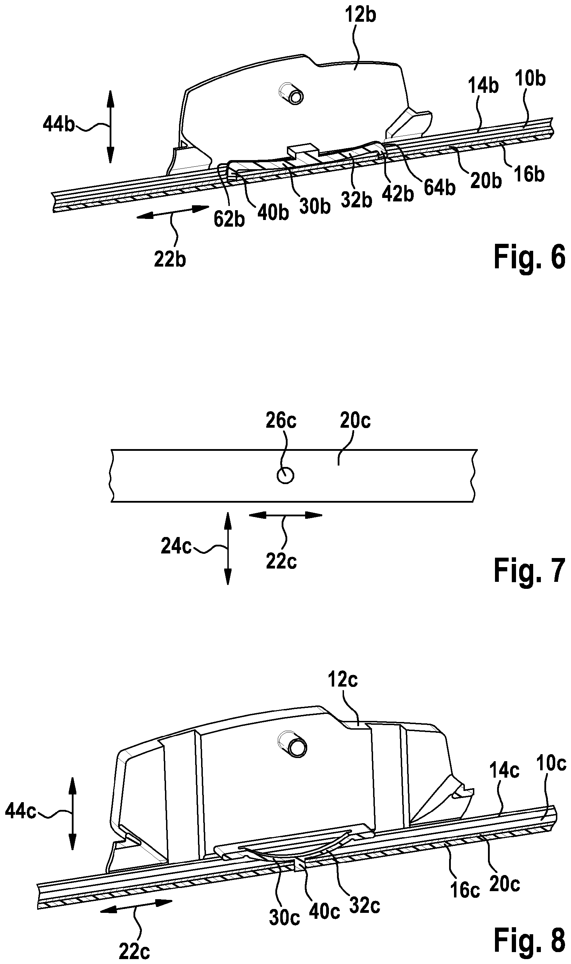

In Figur 6 sind ein Wischblattadapter 12b, ein Halteelement 10b und das Federelement 20b in einem Schnitt dargestellt. Das Halteelement 10b weist einen wie in Figur 2 gezeigten Querschnitt auf. Der Wischblattadapter 12b weist zwei Rastelemente 40b, 42b auf. Die beiden Rastelemente 40b, 42b greifen in einem montierten Zustand formschlüssig in die Rastausnehmungen 26b, 28b des Federelements 20b ein und vermeiden so eine Bewegung des Wischblattadapters 12b relativ zum Federelement 20b in Längsrichtung 22b. Die beiden Rastelemente 40b, 42b liegen dabei am Federelement 20b an einer wischleistenabgewandten Seite an.

Die Rastelemente 40b, 42b weisen jeweils einen Rastarm 30b, 32b auf, der mit dem Wischblattadapter 12b an einem Ende verbunden und dazu vorgesehen ist, federelastisch ausgelenkt zu werden. Die beiden Rastarme 30b, 32b erstrecken sich in einer Haupterstreckung parallel zur Längsrichtung 22b des Federelements 20b. Die Rastelemente 40b, 42b sind um jeweils um eine gemeinsame Schwenkachse auslenkbar, die sich parallel zu einer Wischrichtung 24b erstreckt. Die Rastelemente 40b, 42b erstrecken sich von den Rastarmen 30b, 32b fortsatzmäßig in Richtung einer Wischleiste 16b. Freie Rastarmenden 62b, 64b der Rastarme 30b, 32b weisen in voneinander abgewandte Richtungen.

Die Rastelemente 40b, 42b werden bei der Montage zunächst aus einer Ausgangsposition heraus in eine Vertikalrichtung 44b federelastisch ausgelenkt. Die Vertikalrichtung 44b erstreckt sich senkrecht zur Längsrichtung 22b und senkrecht zur Wischrichtung 24b. Somit steht die Vertikalrichtung 44b in einem Betriebszustand zumindest im Wesentlichen senkrecht zu einer zu wischenden Oberfläche (nicht dargestellt). Sobald die Rastelemente 40b, 42b ausgelenkt sind, wird der Wischblattadapter 12b in Längsrichtung 22b auf das Halteelement 10b und das im Halteelement 10b eingesetzte Federelement 20b aufgeschoben. Befinden sich die Rastelemente 40b, 42b über den Rastausnehmungen 26b, 28b, greifen sie in diese formschlüssig ein. Eine Bewegung des Federelements 20b relativ zum Wischblattadapter 12b in Längsrichtung 22b ist somit vermieden.

Figur 7 zeigt eine Draufsicht auf ein Federelement 20c eines weiteren Ausführungsbeispiels einer Wischvorrichtung. Das Federelement 20c weist genau eine runde Rastausnehmung 26c auf. Die Rastausnehmung 26c ist kreisrund ausgebildet. Ein gedachtes Zentrum der Rastausnehmung 26c ist auf einer Symmetrieebene des Federelements 20c angeordnet, die sich senkrecht zu einer Wischrichtung 24c der Wischvorrichtung erstreckt. Ein Durchmesser der Rastausnehmung 26c entspricht einem Drittel der Gesamterstreckung des Federelements 20c in Wischrichtung 24c.

In Figur 8 sind ein Wischblattadapter 12c, ein Halteelement 10c und das Federelement 20c in einem Schnitt dargestellt. Das Halteelement 10c weist einen wie in Figur 2 gezeigten Querschnitt auf. Der Wischblattadapter 12c weist genau ein Rastelement 40c auf. Das Rastelement 40c greift in einem montierten Zustand formschlüssig in die Rastausnehmung 26c des Federelements 20c ein und vermeidet so eine Bewegung des Wischblattadapters 12c relativ zum Federelement 20c in Längsrichtung 22c. Das Rastelement 40c liegt dabei am Federelement 20c an einer wischleistenabgewandten Seite an.

Das Rastelement 40c weist zwei Rastarme 30c, 32c auf, die jeweils mit dem Wischblattadapter 12c an einem Ende verbunden und dazu vorgesehen sind, federelastisch ausgelenkt zu werden. Die zwei Rastarme 30c, 32c erstrecken sich in einer Haupterstreckung parallel zur Längsrichtung 22c des Federelements 20c. Das Rastelement 40c ist um eine Schwenkachse auslenkbar, die sich parallel zu einer Wischrichtung 24c erstreckt. Das Rastelement 40c erstreckt sich von den Rastarmen 30c, 32c fortsatzmäßig in Richtung einer Wischleiste 16c.

Das Rastelement 40c wird bei der Montage zunächst aus einer Ausgangsposition heraus in eine Vertikalrichtung 44c federelastisch ausgelenkt. Die Vertikalrichtung 44c erstreckt sich senkrecht zur Längsrichtung 22c und senkrecht zur Wischrichtung 24c. Somit steht die Vertikalrichtung 44c in einem Betriebszustand zumindest im Wesentlichen senkrecht zu einer zu wischenden Oberfläche (nicht dargestellt). Sobald das Rastelement 40c ausgelenkt ist, wird der Wischblattadapter 12c in Längsrichtung 22c auf das Halteelement 10c und das im Halteelement 10c eingesetzte Federelement 20c aufgeschoben. Befindet sich das Rastelement 40c über der Rastausnehmung 26c, greift sie in diese formschlüssig ein. Eine Bewegung des Federelements 20c relativ zum Wischblattadapter 12c in Längsrichtung 22c ist somit vermieden.

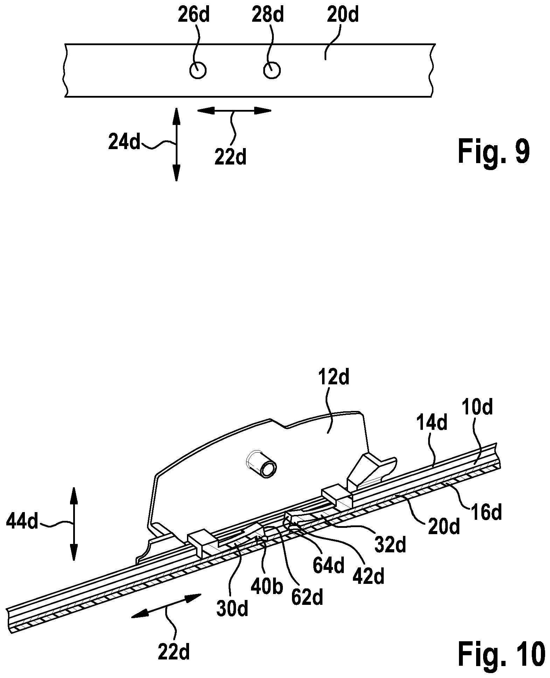

Figur 9 zeigt eine Draufsicht auf ein Federelement 20d eines weiteren Ausführungsbeispiels einer Wischvorrichtung. Das Federelement 20d weist zwei runde Rastausnehmungen 26d, 28d auf. Die Rastausnehmungen 26d, 28d sind kreisrund ausgebildet. Die Rastausnehmungen 26d, 28d sind, in Längsrichtung 22d betrachtet, hintereinander angeordnet, wobei gedachte Zentren der Rastausnehmungen 26d, 28d auf einer Symmetrieebene des Federelements 20d angeordnet sind, die sich senkrecht zu einer Wischrichtung 24d der Wischvorrichtung erstreckt. Ein jeweiliger Durchmesser der Rastausnehmungen 26d, 28d entspricht einem Drittel der Gesamterstreckung des Federelements 20d in Wischrichtung 24d.

In Figur 10 sind ein Wischblattadapter 12d, ein Halteelement 10d und das Federelement 20d in einem Schnitt dargestellt. Das Halteelement 10d weist einen wie in Figur 2 gezeigten Querschnitt auf. Der Wischblattadapter 12d weist zwei Rastelemente 40d, 42d auf. Die beiden Rastelemente 40d, 42d greifen in einem montierten Zustand formschlüssig in die Rastausnehmungen 26d, 28d des Federelements 20d ein und vermeiden so eine Bewegung des Wischblattadapters 12d relativ zum Federelement 20d in Längsrichtung 22d. Die beiden Rastelemente 40d, 42d liegen dabei am Federelement 20d an einer wischleistenabgewandten Seite an.

Die Rastelemente 40d, 42d weisen jeweils einen Rastarm 30d, 32d auf, der mit dem Wischblattadapter 12d an einem Ende verbunden und dazu vorgesehen ist, federelastisch ausgelenkt zu werden. Die zwei Rastarme 30d, 32d erstrecken sich in einer Haupterstreckung parallel zur Längsrichtung 22d des Federelements 20d. Die Rastelemente 40d, 42d sind jeweils um eine eigene Schwenkachse auslenkbar, die sich parallel zur Wischrichtung 24d erstreckt. Die Rastelemente 40d, 42d erstrecken sich von den Rastarmen 30d, 32d fortsatzmäßig in Richtung einer Wischleiste 16d. Freie Rastarmenden 62d, 64d der Rastarme 30d, 32d weisen in einander zugewandte Richtungen.

Die Rastelemente 40d, 42d werden bei der Montage zunächst aus einer Ausgangsposition heraus in eine Vertikalrichtung 44d federelastisch ausgelenkt. Die Vertikalrichtung 44d erstreckt sich senkrecht zur Längsrichtung 22d und senkrecht zur Wischrichtung 24d. Somit steht die Vertikalrichtung 44d in einem Betriebszustand zumindest im Wesentlichen senkrecht zu einer zu wischenden Oberfläche (nicht dargestellt). Sobald die Rastelemente 40d, 42d ausgelenkt sind, wird der Wischblattadapter 12d in Längsrichtung 22d auf das Halteelement 10d und das im Halteelement 10d eingesetzte Federelement 20d aufgeschoben. Befinden sich die Rastelemente 40d, 42d über den Rastausnehmungen 26d, 28d, greifen sie in diese formschlüssig ein. Eine Bewegung des Federelements 20d relativ zum Wischblattadapter 12d in Längsrichtung 22d ist somit vermieden.

## Patentansprüche

1. Wischvorrichtung, insbesondere Kraftfahrzeugscheibenwischvorrichtung, mit einem Federelement (20a; 20c) und mit einem Wischblattadapter (12a; 12c), der zumindest ein Rastelement (40a; 40c, 42; 42c) aufweist, wobei das Federelement (20a; 20c) zumindest eine runde Rastausnehmung (26a; 26c, 28a; 28c) aufweist, in die das zumindest eine Rastelement (40a; 40c, 42; 42c) in einem montierten Zustand formschlüssig eingreift und eine Bewegung des Wischblattadapters (12a; 12c) relativ zum Federelement (20a; 20c) in eine Längsrichtung (22a; 22c) vermeidet, **dadurch gekennzeichnet, dass** das zumindest eine Rastelement (40a; 40c, 42a) zumindest zwei Rastarme (30a; 30c, 32a; 32c, 34a, 36a) aufweist, die mit dem Wischblattadapter (12a; 12c) verbunden und dazu vorgesehen sind, federelastisch ausgelenkt zu werden, wobei die Rastarme (30a, 30c, 32a, 32c, 34a, 36a) das Rastelement (40a, 40c, 42c) federelastisch mit dem Wischblattadapter (12a, 12c) verbinden.

2. Wischvorrichtung nach Anspruch 1, **dadurch gekennzeichnet, dass** das zumindest eine Rastelement (40a; 40c, 42c) am zumindest einen Federelement (20a; 20c) in einem montierten Zustand an einer wischleistenabgewandten Seite anliegt.

3. Wischvorrichtung nach Anspruch 1 oder 2, **dadurch gekennzeichnet, dass** das zumindest eine Rastelement (40a; 40c, 42c) dazu vorgesehen ist, bei einer Montage zumindest im Wesentlichen in eine Vertikalrichtung (44a; 44c) ausgelenkt zu werden

4. Wischvorrichtung nach einem der vorhergehenden Ansprüche, **dadurch gekennzeichnet, dass** sich die zumindest zwei Rastarme (30a; 30c, 32a; 32c, 34a, 36a) in einer Haupterstreckung zumindest im Wesentlichen parallel zur Längsrichtung (22a; 22c) des Federelements (20a; 20c) erstrecken.

5. Wischvorrichtung nach einem der vorhergehenden Ansprüche, **dadurch gekennzeichnet, dass** das zumindest eine Rastelement (40a; 40c, 42a) um zumindest eine Schwenkachse auslenkbar ist, die sich parallel zu einer Wischrichtung (24a; 24c) erstreckt.

6. Wischblatt mit einer Wischvorrichtung nach einem der vorhergehenden Ansprüche, sowie mit einem Federelement (20a; 20c), einem Windabweiserelement (14a; 14c), einem Halteelement (10a; 10c) und einer Wischleiste (16a; 16c).

## Claims

1. Wiping device, in particular wiping device for a motor vehicle pane, comprising a spring element (20a; 20c) and comprising a wiper blade adapter (12a; 12c) which has at least one latching element (40a; 40c, 42; 42c), wherein the spring element (20a; 20c) has at least one round latching recess (26a; 26c, 28a; 28c) in which the at least one latching element (40a; 40c, 42; 42c) engages in an interlocking manner in a fitted state and avoids a movement of the wiper blade adapter (12a; 12c) relative to the spring element (20a; 20c) in a longitudinal direction (22a; 22c), **characterized in that** the at least one latching element (40a; 40c, 42a) has at least two latching arms (30a; 30c, 32a; 32c, 34a, 36a) which are connected to the wiper blade adapter (12a; 12c) and are provided to be deflected in a spring-elastic manner, wherein the latching arms (30a, 30c, 32a, 32c, 34a, 36a) connect the latching element (40a, 40c, 42c) to the wiper blade adapter (12a, 12c) in a spring-elastic manner.

2. Wiping device according to Claim 1, **characterized in that,** in a fitted state, the at least one latching element (40a; 40c, 42c) bears against the at least one spring element (20a; 20c) on a side facing away from the wiper strip.

3. Wiping device according to Claim 1 or 2, **characterized in that** the at least one latching element (40a; 40c, 42c) is provided to be deflected at least substantially in a vertical direction (44a; 44c) during installation.

4. Wiping device according to one of the preceding claims, **characterized in that** the at least two latching arms (30a; 30c, 32a; 32c, 34a, 36a) extend in a main extent at least substantially parallel to the longitudinal direction (22a; 22c) of the spring element (20a; 20c).

5. Wiping device according to one of the preceding claims, **characterized in that** the at least one latching element (40a; 40c, 42a) is deflectable about at least one pivot axis which extends parallel to a wiping direction (24a; 24c).

6. Wiping blade comprising a wiping device according to one of the preceding claims, and comprising a spring element (20a; 20c), a wind spoiler element (14a; 14c), a retaining element (10a; 10c) and a wiper strip (16a; 16c).

## Revendications

1. Dispositif d'essuyage, en particulier dispositif essuie-glace pour véhicule automobile, comprenant un élément faisant ressort (20a ; 20c) et un adaptateur de balai d'essuie-glace (12a ; 12c) présentant au moins un élément d'encliquetage (40a ; 40c, 42 ; 42c), l'élément faisant ressort (20a ; 20c) présentant au moins un évidement d'encliquetage circulaire (26a ; 26c, 28a ; 28c) dans lequel ledit au moins un élément d'encliquetage (40a ; 40c, 42 ; 42c) vient en prise par complémentarité de forme à l'état monté et évite un mouvement de l'adaptateur de balai d'essuie-glace (12a ; 12c) par rapport à l'élément faisant ressort (20a ; 20c) dans une direction longitudinale (22a ; 22c), **caractérisé en ce que** ledit au moins un élément d'encliquetage (40a ; 40c, 42a) présente au moins deux bras d'encliquetage (30a ; 30c, 32a ; 32c, 34a, 36a) qui sont reliés à l'adaptateur de balai d'essuie-glace (12a ; 12c) et prévus pour être déviés de manière élastique, les bras d'encliquetage (30a, 30c, 32a, 32c, 34a, 36a) reliant l'élément d'encliquetage (40a, 40c, 42c) de manière élastique à l'adaptateur de balai d'essuie-glace (12a, 12c).

2. Dispositif d'essuyage selon la revendication 1, **caractérisé en ce que** ledit au moins un élément d'encliquetage (40a ; 40c, 42c) s'applique contre ledit au moins un élément faisant ressort (20a ; 20c) à l'état monté, du côté détourné de la lame d'essuyage.

3. Dispositif d'essuyage selon la revendication 1 ou 2, **caractérisé en ce que** ledit au moins un élément d'encliquetage (40a ; 40c, 42c) est prévu pour être dévié lors d'un montage au moins substantiellement dans une direction verticale (44a ; 44c).

4. Dispositif d'essuyage selon l'une quelconque des revendications précédentes, **caractérisé en ce que** lesdits au moins deux bras d'encliquetage (30a ; 30c, 32a ; 32c, 34a, 36a) s'étendent dans une extension principale au moins substantiellement en parallèle à la direction longitudinale (22a ; 22c) de l'élément faisant ressort (20a ; 20c).

5. Dispositif d'essuyage selon l'une quelconque des revendications précédentes, **caractérisé en ce qu'**au moins un élément d'encliquetage (40a ; 40c, 42a) peut être dévié au moins autour d'au moins un axe de pivotement s'étendant en parallèle à une direction d'essuyage (24a ; 24c).

6. Balai d'essuie-glace, comprenant un dispositif d'essuyage selon l'une quelconque des revendications précédentes, ainsi qu'un élément faisant ressort (20a ; 20c), un élément déflecteur de vent (14a ; 14c), un élément de maintien (10a ; 10c) et une lame d'essuyage (16a ; 16c).
